# DEMANDE DE BREVET EUROPEEN

(11) **EP 0 840 099 A1**
(43) Date de publication de la demande: **06.05.1998**
(21) Numéro de dépôt: 97402559.5
(22) Date de dépôt: 28.10.1997
(51) Int. Cl.: G01F 23/16, A47J 31/56

(54) **Dispositif de détection du niveau d'eau dans un appareil de chauffage électrique**

(30) Priorité: 30.10.1996 FR 9613261
(71) Demandeur: SEB S.A., 69130 Ecully (FR)
(72) Inventeur: Deliens, Patrick, 39700 Dampierre (FR)
(74) Mandataire: Keib, Gérard

(57) **Abrégé**

Dispositif de détection du niveau d'eau du liquide contenu dans un récipient (2) comprenant une résistance électrique de chauffage (7), ce dispositif comportant un tube (3) dont l'extrémité inférieure communique avec le liquide, caractérisé en ce que l'extrémité supérieure du tube (3) est reliée à un organe (6) sensible à la pression régnant à l'intérieur du tube (3), cet organe (6) étant relié électriquement à l'alimentation électrique de la résistance électrique (7) de chauffage de façon à couper cette alimentation en dessous d'un seuil prédéterminé de la pression régnant à l'intérieur du tube (3) correspondant à un niveau du liquide.

## Description

La présente invention concerne un dispositif de détection du niveau du liquide dans un récipient comprenant une résistance électrique de chauffage.

L'invention vise particulièrement, mais non limitativement, une bouilloire électrique équipée du dispositif ci-dessus.

On sait que dans une bouilloire électrique, le niveau d'eau ne doit pas descendre en dessous d'un certain seuil, pour éviter la surchauffe et la destruction de la résistance de chauffage et la fusion du récipient de la bouilloire lorsque celle-ci est en matière plastique.

A cet effet, les bouilloires électriques comprennent un organe de sécurité qui coupe l'alimentation électrique de la résistance. Cet organe est généralement constitué par un dispositif sensible à la température, tel qu'un fusible ou un limiteur de température.

Lorsqu'il s'agit d'un fusible, celui-ci doit être changé, pour remettre la bouilloire en état de fonctionnement, ce qui constitue un inconvénient pour l'utilisateur.

Lorsqu'il s'agit d'un limiteur de température, il y a lieu de le réarmer pour remettre la bouilloire en état de fonctionnement, ce qui constitue également un inconvénient.

Le but de la présente invention est de créer un dispositif permettant de détecter le niveau de liquide contenu dans un récipient et de commander la coupure de l'alimentation électrique de la résistance de chauffage, en dessous d'un certain seuil du niveau du liquide.

L'invention vise ainsi un dispositif de détection du niveau du liquide contenu dans un récipient comprenant une résistance électrique de chauffage, ce dispositif comportant un tube dont l'extrémité inférieure communique avec le liquide.

Suivant l'invention, ce dispositif est caractérisé en ce que l'extrémité supérieure du tube est reliée à un organe sensible à la pression régnant à l'intérieur du tube, cet organe étant relié électriquement à l'alimentation électrique de la résistance électrique de chauffage de façon à couper cette alimentation en dessous d'un seuil prédéterminé de la pression régnant à l'intérieur du tube correspondant à un niveau minimal du liquide.

Lorsque l'on remplit le récipient, le liquide monte dans le tube et comprime le volume d'air compris entre le niveau du liquide contenu dans le tube et l'organe sensible à la pression.

Lorsque le niveau du liquide baisse, le volume d'air ci-dessus se détend et l'organe sensible à la pression, détecte une diminution de la pression.

Ainsi, lorsque l'organe détecte une pression minimale, correspondant à un niveau de liquide trop faible, l'organe commande la coupure de l'alimentation électrique de la résistance électrique de chauffage.

De préférence, l'organe sensible à la pression est un pressostat.

L'invention vise également une bouilloire électrique équipée d'un dispositif de détection de niveau du genre ci-dessus.

Un tel dispositif fonctionne d'une manière sûre et ne présente pas les inconvénients des dispositifs sensibles à la température utilisés à ce jour.

D'autres particularités et avantages de l'invention apparaîtront encore dans la description ci-après.

Aux dessins annexés, donnés à titre d'exemples non limitatifs:
- la figure 1 est une vue en coupe verticale d'une bouilloire électrique équipée du dispositif de détection conforme à l'invention;
- la figure 2 est une vue en coupe suivant le plan II-II de la figure 1;
- la figure 3 est une vue en coupe suivant le plan III-III de la figure 2.

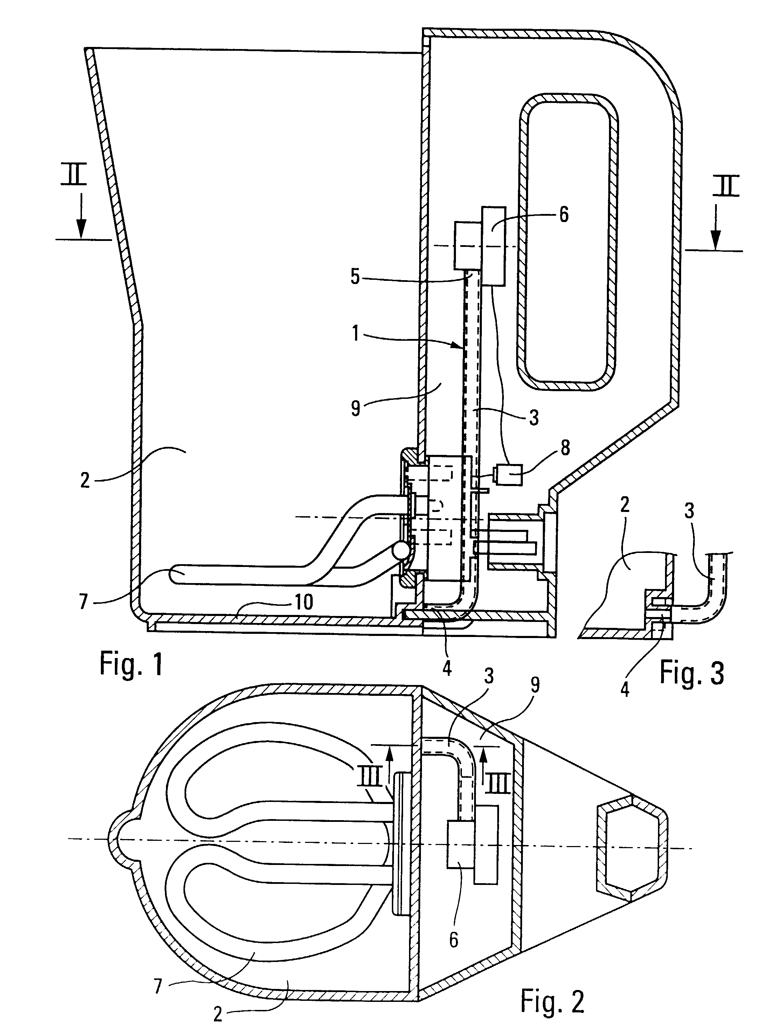

Dans la réalisation représentée sur les figures 1 et 2, le dispositif 1 de détection du niveau du liquide contenu dans le récipient 2 de la bouilloire, comporte un tube 3 dont l'extrémité inférieure 4 communique avec le liquide.

Conformément à l'invention, l'extrémité supérieure 5 du tube 3 est reliée à un organe 6 sensible à la pression régnant à l'intérieur du tube 3. Cet organe 6 est relié électriquement à l'alimentation électrique de la résistance électrique de chauffage 7 située au fond du récipient 2, de façon à couper cette alimentation en dessous d'un seuil prédéterminé de la pression régnant à l'intérieur du tube 3 correspondant à un niveau minimal du liquide.

De préférence, l'organe 6 sensible à la pression est un pressostat.

Compte-tenu du courant d'intensité relativement élevée qui alimente la résistance 7, l'organe 6 sensible à la pression est relié électriquement à l'alimentation électrique de la résistance 7 par l'intermédiaire d'un relais 8.

Dans l'exemple représenté, l'organe 6 sensible à la pression est logé dans un compartiment 9 séparé du récipient à eau 2 de la bouilloire et le tube 3 s'étend sensiblement verticalement dans le compartiment 9.

Par ailleurs, l'extrémité inférieure 4 du tube 3 est coudée et débouche dans le récipient 1, près du fond 10 de celui-ci, sous la résistance 7 de chauffage.

Le dispositif que l'on vient de décrire fonctionne de la façon suivante:

Lorsque l'on remplit le récipient 2 de la bouilloire, l'eau monte dans le tube 3 et comprime le volume d'air compris entre le niveau de l'eau contenue dans le tube et la membrane sensible à la pression du pressostat 6. Du fait de la pression exercée par le volume d'air comprimé, la membrane se déforme et le pressostat 6 est en position active. Dans cette position, l'alimentation électrique de la résistance chauffante 7 est permise.

Lorsque le niveau d'eau baisse, le volume d'air contenu dans le tube 3 se détend. Lorsque le niveau d'eau est insuffisant la membrane du pressostat 6 n'est plus soumise à une pression suffisante. Dans ce cas, le pressostat 6 commande par l'intermédiaire du relais 8 la coupure de l'alimentation électrique de la résistance 7.

De ce fait, on évite tout risque de surchauffe pouvant entraîner la destruction de la bouilloire ou occasionner des brûlures.

Bien entendu, l'invention n'est pas limitée à l'exemple que l'on vient de décrire et on peut apporter à celui-ci de nombreuses modifications sans sortir du cadre de l'invention.

Ainsi, l'invention peut s'appliquer à tout appareil électrique pour chauffer un liquide.

## Revendications

1. Dispositif de détection du niveau du liquide contenu dans un récipient (2) comprenant une résistance électrique de chauffage (7), ce dispositif comportant un tube (3) dont l'extrémité inférieure communique avec le liquide, caractérisé en ce que l'extrémité supérieure du tube (3) est reliée à un organe (6) sensible à la pression régnant à l'intérieur du tube (3), cet organe (6) étant relié électriquement à l'alimentation électrique de la résistance électrique (7) de chauffage de façon à couper cette alimentation en dessous d'un seuil prédéterminé de la pression régnant à l'intérieur du tube (3) correspondant à un niveau minimal du liquide.

2. Dispositif conforme à la revendication 1, caractérisé en ce que l'organe (6) sensible à la pression est un pressostat.

3. Dispositif conforme à l'une des revendications 1 ou 2, caractérisé en ce que l'organe (6) sensible à la pression est relié électriquement à l'alimentation électrique de la résistance par l'intermédiaire d'un relais (8).

4. Bouilloire électrique comprenant un dispositif de détection du niveau d'eau, conforme à l'une des revendications 1 à 3.

5. Bouilloire conforme à la revendication 4, caractérisé en ce que l'organe (6) sensible à la pression est logé dans un compartiment (9) séparé du récipient à eau (2) de la bouilloire, le tube (3) s'étendant sensiblement verticalement dans ce compartiment (9).

6. Bouilloire conforme à la revendication 5, caractérisé en ce que l'extrémité inférieure du tube (3) est coudée et débouche dans le récipient (2), près du fond (10) de celui-ci.
